# DEMANDE DE BREVET EUROPEEN

(11) **EP 0 886 254 A1**
(43) Date de publication de la demande: **23.12.1998**
(21) Numéro de dépôt: 98401445.6
(22) Date de dépôt: 12.06.1998
(51) Int. Cl.: G09B 9/05

(54) **Dispositif de visualisation compact pour simulateur de véhicule à cabine de conduite large**

(30) Priorité: 20.06.1997 FR 9707710
(71) Demandeur: THOMSON-CSF, 75008 Paris (FR)
(72) Inventeur: Gaubert, Jean-Pierre, 94117 Arcueil Cedex (FR); Louard, Daniel, 94117 Arcueil Cedex (FR)
(74) Mandataire: Chaverneff, Vladimir

(57) **Abrégé**

Pour rendre plus compact le dispositif de visualisation d'un simulateur de camion, les images des projecteurs (2 à 5) sont directement projetées sur le pare-brise de la cabine et sur ses vitres latérales. Avantage : faible inertie, coût et encombrement réduits.

## Description

La présente invention se rapporte à un dispositif de visualisation compact pour simulateur de véhicule à cabine de conduite large.

Actuellement, les simulateurs de véhicules se rapportent à des véhicules dont la cabine est relativement étroite: avions, hélicoptères, voitures automobiles particulières. Les projecteurs des dispositifs de visualisation de tels simulateurs sont généralement disposés au-dessus de la cabine, et leurs faisceaux passent à l'extérieur de la cabine.

Si l'on voulait adapter de tels dispositifs de visualisation à des simulateurs de véhicules à cabine large (camions, autocars, locomotives Diesel ou électriques...), tout en ayant le même champ de visibilité qu'avec des véhicules réels, (au moins 180° de champ horizontal et 40° de champ vertical), leurs projecteurs projetteraient leurs images sur des écrans situés à 2,5 à 3 m de l'observateur, et ces dispositifs de visualisation seraient très encombrants (environ 40 m²), et/ou leur inertie serait très élevée ( ce qui limiterait le niveau des accélérations imprimées à la cabine) et/ou les images projetées seraient déformées.

La présente invention a pour objet un dispositif de visualisation pour un simulateur de véhicule à cabine de conduite large du type précité, dispositif qui soit simple, bon marché, peu encombrant, à relativement faible inertie, et dont les images visualisées ne soient pratiquement pas déformées, tout en offrant le même champ de visualisation que dans la réalité.

Le dispositif de visualisation conforme à l'invention, associé à une cabine large comporte en tant qu'écran de visualisation au moins la surface du pare-brise de la cabine du véhicule rendue translucide, et au moins un système de formation d'images associé à l'écran de visualisation.

De façon avantageuse, le pare-brise est en verre dépoli, ou bien porte un revêtement translucide. De façon avantageuse l'écran de visualisation comporte également au moins une vitre latérale de la cabine et/ou une surface latérale proche d'une vitre latérale, et extérieure à la cabine. Le système de formation d'images comporte au moins un projecteur projetant des images sur au moins la surface du pare-brise, ce projecteur étant relié à un générateur d'images.

Selon un autre mode de réalisation, les surfaces constituant l'écran de visualisation comportent chacune une surface active de formation d'image, et celle-ci est avantageusement une matrice à cristaux liquides fixée sur le pare-brise et, le cas échéant, sur les vitres latérales ou d'autres surfaces latérales, cette matrice étant reliée à une générateur d'images .

Dans le cas où le pare-brise, et éventuellement les vitres latérales ou surfaces latérales sont translucides, le système de formation d'images comporte au moins un projecteur disposé devant la cabine et projetant des images sur le pare-brise. De façon avantageuse, on dispose également au moins un autre projecteur projetant des images sur au moins une surface latérale qui est une vitre latérale translucide de la cabine et/ou une surface translucide proche de la vitre latérale située du côté du conducteur.

La présente invention sera mieux comprise à la lecture de la description détaillée d'un mode de réalisation, pris à titre d'exemple non limitatif et illustré par le dessin annexé, sur lequel :

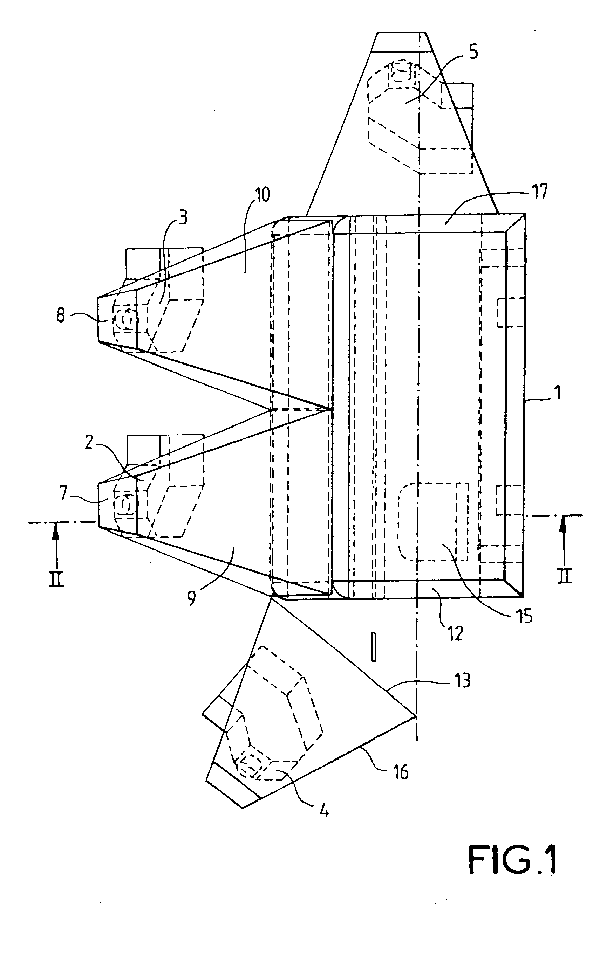

- la figure 1 est une vue de dessus d'une cabine de simulation de camion équipée d'un dispositif de visualisation conforme à l'invention,

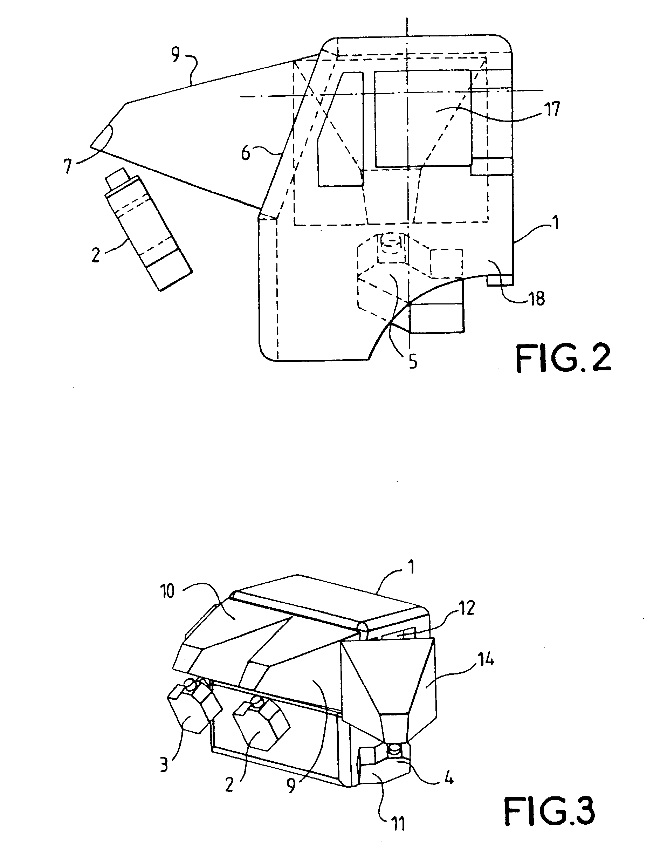

- la figure 2 est une vue en coupe selon II-II de la figure 1, et
- la figure 3 est une vue en perspective de la cabine de la figure 1.

L'invention est décrite ci-dessous en référence à un simulateur de camion, mais il est bien entendu qu'elle n'est pas limitée à une telle application, et peut être mise en oeuvre dans des simulateurs d'autres véhicules à cabine large : autocars, locomotives,...

Dans l'exemple de réalisation représenté sur le dessin, la reproduction 1 de cabine de conduite de camion est associée à deux projecteurs 2,3 frontaux et à deux projecteurs latéraux 4,5, mais il est bien entendu que le nombre de projecteurs peut être différent, et/ou qu'ils peuvent être déposés différemment par rapport à la cabine 1. Ces projecteurs sont, par exemple, des projecteurs classiques à cristaux liquides (LCD).

Les projecteurs 2 et 3 sont disposés à peu près au niveau de la mi-hauteur de la cabine 2, c'est-à-dire à peu près au niveau du bas du pare-brise 6, à quelques dizaines de centimètres devant cette cabine. Ces projecteurs sont en outre disposés, dans le sens de la largeur de la cabine, face au ¼ et aux ¾ de la largeur du pare-brise. Les faisceaux lumineux des projecteurs 2 et 3 sont dirigés vers le haut et vers l'avant, selon un angle d'environ 45° par rapport à la verticale. Ces faisceaux sont renvoyés par des miroirs, respectivement 7,8 vers le pare-brise 6 rendu translucide. Les dispositions respectives des projecteurs 2,3 et des miroirs 7,8 par rapport au pare-brise 6 sont telles que les faisceaux de ces projecteurs illuminent chacun la moitié (gauche ou droite) de la largeur du pare-brise. Des capots 9,10 de forme appropriée isolent de l'ambiance extérieure les faisceaux des projecteurs 2,3 respectivement, de façon qu'aucune lumière extérieure à ces faisceaux ne puisse les perturber.

Le projecteur 4 est fixé sur un support 11, lui-même fixé à la paroi latérale gauche 12 (celle du côté du conducteur) de la cabine 1, par exemple à la partie inférieure de cette paroi. Ce projecteur 4 illumine un écran vertical 13, également fixé sur le support 11. Cet écran 13 fait un angle d'environ 45° par rapport à la paroi 12 à laquelle il est tangent à la partie antérieure de celle-ci. Un capot 14 isole de l'extérieur le faisceau lumineux émis par le projecteur 4 vers l'écran 13. Les dimensions de l'écran 13, sont telles que sa surface vue par l'utilisateur (conducteur du véhicule simulé) assis sur le siège de gauche 15 corresponde sensiblement à la surface de la vitre de la paroi 12 telle que vue par l'utilisateur. Un capot 16 isole le faisceau du projecteur 4 de l'ambiance extérieure.

Le projecteur 5 illumine la vitre 17, rendue translucide, de la paroi latérale droite 18 de la cabine 1. Etant donné que cette vitre 17 est suffisamment éloignée du siège 15 du conducteur, il n'y a pas besoin de lui adjoindre un écran extérieur tel que l'écran 13. De même que pour les autres projecteurs 2 à 4, un capot 19 isole de l'ambiance extérieure le faisceau du projecteur 5.

Les surfaces de projection qui sont le pare-brise 6, l'écran 13 et la vitre 17 sont, selon un mode de réalisation, rendues translucides de toute façon appropriée : elles peuvent être dépolies, ou bien on peut fixer sur elles (du côté faisant face aux projecteurs correspondants) une feuille de matériau translucide tel que du Mylar.

Selon un autre mode de réalisation de l'invention, on remplace chaque ensemble de formation d'images « projecteur + surface dépolie » par un écran « actif ». Un tel écran actif peut être réalisé par exemple à l'aide d'une structure matricielle à cristaux liquides, couramment utilisée pour réaliser des écrans de faible épaisseur. Pour réaliser un écran de très grandes dimensions telles que celles d'un pare-brise de camion, un tel écran à cristaux liquides est actuellement plus onéreux qu'un projecteur tel que les projecteurs 2 à 5, mais dans un relativement proche avenir, son prix de revient pourra être comparable à celui d'un projecteur.

Bien entendu, les projecteurs 2 à 5 ou bien les écrans à cristaux liquides sont reliés à des générateurs d'images réelles et/ou synthétiques appropriés, dont la réalisation est évidente pour l'homme du métier à la lecture de la présente description. Ces générateurs d'images reproduisent l'environnement visuel de l'utilisateur tel qu'il le verrait à travers le pare-brise et les vitres latérales d'un camion réel.

De façon avantageuse, les images formées sur l'écran 13 et la vitre 17 simulent également les images que verrait l'utilisateur dans les rétroviseurs gauche et droit d'un camion réel.

## Revendications

1. Dispositif de visualisation compact pour simulateur de véhicule à cabine de conduite large, caractérisé par le fait qu'il comporte en tant qu'écran de visualisation au moins la surface du pare-brise (6) rendue translucide, et au moins un système de formation d'images (2 à 5) associé à l'écran de visualisation.

2. Dispositif selon la revendication 1, caractérisé par le fait que l'écran de visualisation comporte, outre le pare-brise, au moins une vitre latérale de la cabine ( 12, 17).

3. Dispositif selon la revendication 1 ou 2, caractérisé par le fait que l'écran de visualisation comporte une surface latérale (13) proche d'une vitre latérale, extérieure à la cabine.

4. Dispositif selon l'une des revendications précédentes, caractérisé par le fait les surfaces constituant l'écran de visualisation sont en verre dépoli.

5. Dispositif selon l'une des revendications 1 à 3, caractérisé par le fait que les surfaces constituant l'écran de visualisation portent un revêtement translucide.

6. Dispositif selon l'une des revendications 1 à 5, caractérisé par le fait que le système de formation d'images comporte au moins un projecteur (2 à 5) projetant des images sur au moins la surface du pare-brise et relié à un générateur.

7. Dispositif selon l'un des revendications 1 à 3, caractérisé par le fait que les surfaces constituant l'écran de visualisation portent une surface active de formation d'images, reliée à un générateur d'images.

8. Dispositif selon la revendication 7, caractérisé par le fait que chaque surface active de formation d'images comporte une matrice à cristaux liquides.
